# EUROPEAN PATENT APPLICATION

(11) **EP 2 423 469 A2**
(43) Date of publication of application: **29.02.2012**
(21) Application number: 10150685.5
(22) Date of filing: 13.01.2010
(51) Int. Cl.: F01K 23/10, F02C 6/00, F02C 6/18

(54) **Combined power augmentation system and method**

(30) Priority: 16.01.2009 US 354878
(71) Applicant: General Electric Company, Schenectady, NY 12345 (US)
(72) Inventor: Nattanmai, Saravanan Venkataraman, 60023, Chennai Tamilnadu (IN); Abraham, Shaji, 686516 Kerala (IN); Lokanath, Shrivaprasad, 575014 Surathkal (IN); Sengar, Ajit Singh, 560078 Bangalore, Karnataka (IN)
(74) Representative: Gray, Thomas

(57) **Abstract**

An electrical generation system including a first gas turbine (324) and a heat recovery steam generator (330) coupled to the gas turbine and including high pressure super-heater (318) having a high pressure super-heater output. The electrical generation system also includes a second gas turbine (306), an output duct (308) coupled to the second gas turbine and a supplemental high pressure super-heater (312) within the output duct and thermally coupled to the high pressure super-heater output.

## Description

### BACKGROUND OF THE INVENTION

The subject matter disclosed herein relates to producing electrical power and, in particular, to producing electrical power during peak demand periods by utilizing peaker cycle heat exhaust recovery.

Baseload (also base load, or baseload demand) is the minimum amount of power that a utility or distribution company must make available to its customers, or the amount of power required to meet minimum demands based on reasonable expectations of customer requirements. Baseload values typically vary from hour to hour in most commercial and industrial areas. The baseload is generated by a so-called "baseload power plant."

Peaks or spikes in customer power demand are handled by smaller and more responsive types of power plants called peaker power plants. Of course, a baseload power plant may be co-located with a peaker power plant. The time that a peaker plant operates may be many hours a day or as little as a few hours per year, depending on the condition of the region's electrical grid. It is expensive to build an efficient power plant, so if a peaker plant is only going to be run for a short or highly variable time, it may not make economic sense to make it as efficient as a base load power plant. In addition, the equipment and fuels used in base load plants are often unsuitable for use in peaker plants because the fluctuating conditions would severely strain the equipment. For these reasons, nuclear, geothermal, waste-to-energy, coal, and biomass plants are rarely, if ever, operated as peaker plants.

Peaker plants are generally gas turbines that bum natural gas. A few burn petroleum-derived liquids, such as diesel oil and jet fuel, but they are usually more expensive than natural gas, so their use is limited.

For greater efficiency, a Heat Recovery Steam Generator (HRSG) is added at the exhaust. This is known as a combined cycle plant. Cogeneration uses waste exhaust heat for process or other heating uses. Both of these options are used only in plants that are intended to be operated for longer periods than usual.

Peak load requirements in the past have been met using different techniques depending on the duration and the maximum power requirements. Some are described below.

One prior solution is the so-called "duct burning" solution. During the peak load operation, additional fuel is burned in the exhaust stack upstream of a heat recovery steam generator (HRSG) to produce additional heat and hence additional steam flow and concomitant power output in the bottoming cycle. The exhaust gas is oxygen depleted and, thus, the combustion is not highly efficient. Further the non-uniform temperature distribution may lead to HRSG tube life reduction. In addition, the turbines operate slightly in "off-design" conditions to account for more flow during the peak load operation, making the normal combined cycle mode operation less efficient and lower yielding.

Another solution involves utilizing a simple cycle gas turbine. For applications requiring high peak loads over significantly long periods of time, supplementary simple cycle based gas turbines are used. Start-up time for such turbines must be short, ranging from 7 - 10 minutes, and it is an important design requirement. Such systems may operate with operating efficiency of about 37% and power output of 175 MW, for example. Such systems, however, may have low peak load efficiency due to un-recovered heat in their exhaust. In addition, these systems may require expensive and less reliable high temperature selective catalytic reduction (SCR) catalysts to reduce peaker cycle NOₓ production. Further, exhaust fans for high temperature SCR are very expensive and themselves impose a high auxilary demand power penalty. In cases where an ammonia injection system is used in a peaker system, the external skids for the ammunia injection system is very high.

### BRIEF DESCRIPTION

According to one aspect of the invention, an electrical power generation system is provided. The system includes a first gas turbine and a heat recovery steam generator coupled to the gas turbine. The heat recovery steam generator includes a high pressure super-heater having a high pressure super-heater output. The system also includes a second gas turbine and an output duct coupled to the second gas turbine. The system also includes a supplemental high pressure super-heater within the output duct and thermally coupled to the high pressure super-heater output and an attemperator coupled between the high pressure super-heater output and the supplemental high pressure super-heater.

According to one aspect of the invention, an electrical power generation system is provided. The system of this aspect includes a combined cycle and a peaker cycle. The combined cycle includes a gas turbine and a heat recovery steam generator coupled to the gas turbine. The heat recovery steam generator includes an intermediate pressure super-heater having an intermediate pressure super-heater output and a low pressure super-heater having a low pressure super-heater output. The peaker cycle includes a peaker gas turbine and an output duct coupled to the peaker gas turbine. The peaker cycle also includes a supplemental intermediate pressure super-heater within the output duct and thermally coupled to the high pressure super-heater output and a supplemental low pressure super-heater within the output duct and thermally coupled to the low pressure super-heater output.

According to yet another aspect of the invention, a method for operating a system including a combined cycle and a peaker cycle, the combined cycle including a gas turbine and a heat recovery steam generator coupled to the gas turbine and a peaker cycle including a peaker gas turbine and an output duct. The method includes superheating a high pressure output product in the heat recovery steam generator; superheating the output product in a supplemental high pressure super-heater within the output duct after the output product has be superheated in the heat recovery steam generator and before the output product is provided a another turbine; and mixing the output product with water in an attemperator before the output product is superheated in the supplemental high pressure super-heater.

These and other advantages and features will become more apparent from the following description taken in conjunction with the drawings.

### BRIEF DESCRIPTION OF THE DRAWINGS

There follows a detailed description of embodiments of the invention by way of example only with reference to the accompanying drawings, in which:
FIG. 1 is system diagram of an electrical power generation system;
FIG. 2 is system diagram for the system shown in FIG. 1 including an attemperator;
FIG. 3 is system diagram of an electrical power generation system according to another embodiment of the present invention; and
FIG. 4 is system diagram of an electrical power generation system according to another embodiment of the present invention.

### DETAILED DESCRIPTION

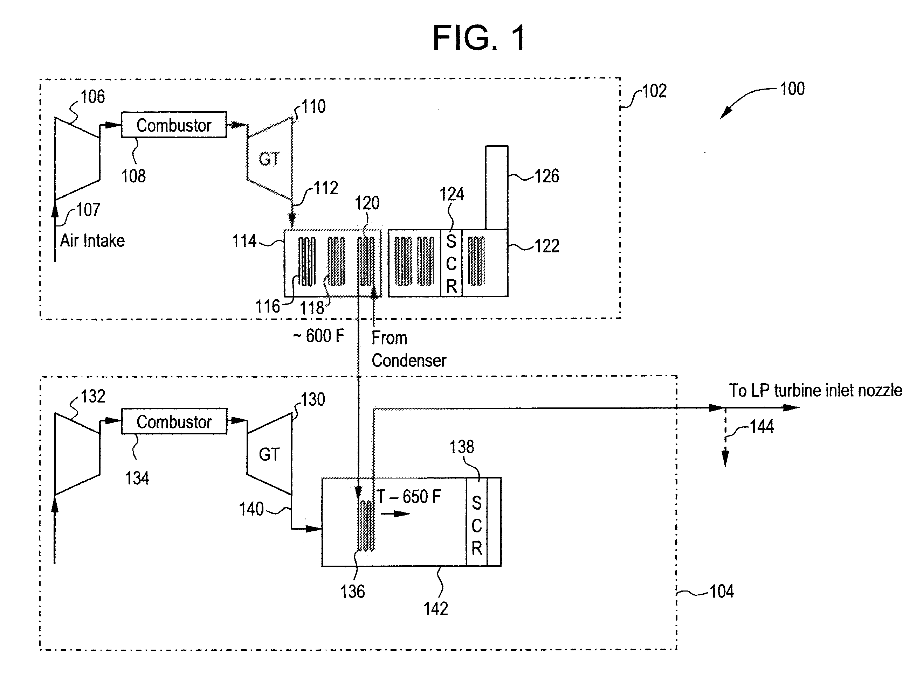

FIG. 1 shows an example of an electrical power generation system 100 according to one embodiment of the present invention. The system 100 includes combined cycle 102 and a peaker cycle 104.

The combined cycle 102 may include a compressor 106 that includes an air intake 107. The compressor 106 is coupled to a combustor 108 that combusts a gas or fuel oil in a stream of compressed air. The compressor 108 is coupled to a gas turbine 110. The gas turbine 110 extracts energy from a flow of hot gas produced by combustion of gas or fuel. In one embodiment, the extracted engery is converted to electricity.

The output 112 of the gas turbine 110 is an exhaust gas that may be used in other cycles of the combined system 100. The exhaust gas may be used, for example, to heat steam for use in a steam turbine (not shown). The combined cycle, thus, includes an HSRG 114. The HSRG 114 may include a high pressure super-heater 116, an intermediate pressure super-heater 118 and a low pressure super-heater 120. The HSRG 114 may include only the low pressure super-heater 120 or any combination of the low pressure super-heater 120 and another super-heater.

The exhaust gas may be at a temperature of appoximately 1150 °F. Ultimately, the exhaust gas is processed in an exhaust duct 120 which includes a low temperature SCR 124 to treat the exhaust gas before it is released through the stack 126.

As described above, the system 100 also includes a peaker cycle 104. In the prior art, such systems, however, had low peak load efficiency. One cause for this low efficiency may be due to un-recovered heat from exhaust gas in the peaker cycle. In addition, these systems required the utilization of less reliable and expensive high temperature SCR catalysts and an additional external high cost cooling fan to cool the exhaust gas to high temperature SCR levels. Further, such systems typically required an external skid for an ammonia injection system to effectively operate a high temperature SCR.

The peaker cycle 104 includes a peaker gas turbine 130. The peaker gas turbine 130 is coupled to a peaker compressor 132 by a peaker combustor 134. The output temperature of the peaker exhaust gas 140 is about 1150 °F and is passed through a peaker exhaust duct 142. The peaker exhaust duct 142 includes a low pressure supplementary super-heater 136 and a peaker low-temperature SCR 138. Of course, the peaker HSRG 142 may be coupled to the stack 126.

An output of the low pressure super-heater 114 is coupled to an input of the supplementary low presssure super-heater 136. An input of the low pressure super-heater may be coupled to a low pressure condensor (not shown).

The temperature of the output product (typically steam) of the low pressure super-heater 114 is typically about 600 °F. As the exhaust gas from the peaker gas turbine 130 passes through the peaker exhaust duct 142 it heats the output product to about 1050 °F while the gas itself cools to about 650 °F. The cooling of the peaker gas turbine's 130 exhaust gas to this temperature allows for normal, rather than high temperature, SCR to be performed thereon. In addition, because output product has been heated in the supplementary low pressure super-heater 136, the waste heat from the peaker cycle 104 has been recovered and, thus, the net efficiency of the combined cycle and peaker cycle is improved.

The output of the supplemental low pressure super-heater 136 is provided to a low pressure turbine inlet nozzle. In one optional embodiment, and as indicated by the dashed arrow labeled 144, the output of the supplemental low pressure super-heater 136 may be diverted to different stages of the low pressure turbine as taught, for example, in U.S. Patent No. 6,442,924.

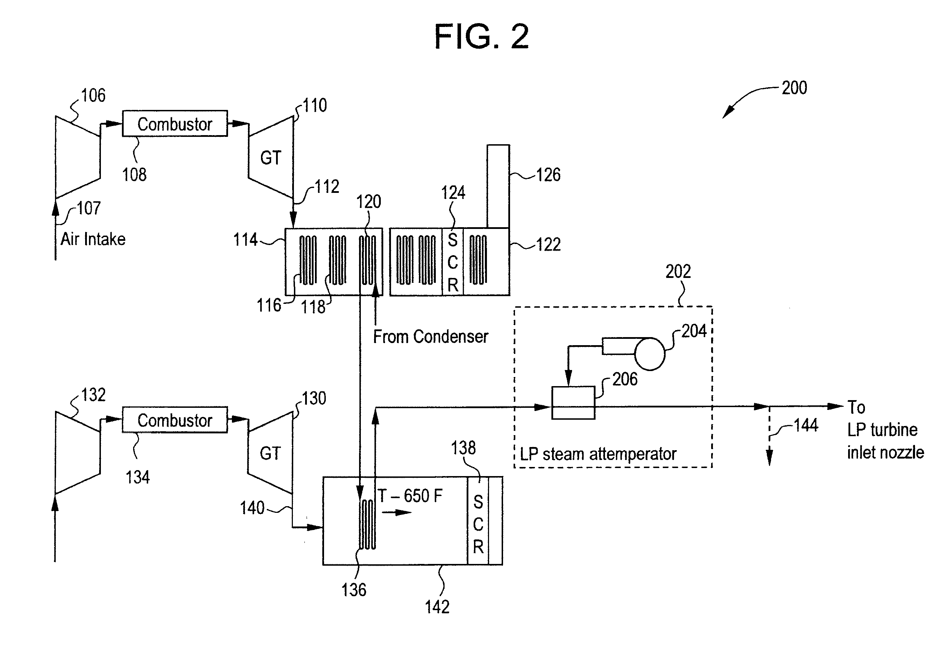

FIG. 2 shows an example of an electrical power generation system 200 similar to that shown in FIG. 1 with an optional low pressure water flow 202. The optional low pressure water flow 202 includes a water pump 204 and a low pressure steam attemperator 206. The optional additional water flow 202 may serve to reduce the temperature of the output product before introduction into a low pressure turbine. For example, the temperature of the output product entering the low pressure steam attemperator 206 may be about 1050 °F and leave at a temperature of about 700-800 °F.

It will be understood from the above description describes a system that allows for the recovery of energy from the peaker cycle. In particular, exhaust gas from the peaker turbine is used to superheat low pressure steam for later use by a combined cycle system and, thereby, increases the efficiency of the combined cycle system.

Typically, intermediate and high pressure steam temperatures for a typical combined cycle plant are about 1050 °F. This makes any additional super heating of these steams using peaker exhaust heat impossible. In one embodiment of the present invention, high pressure steam from the combined cycle is attemperated from about 1050 °F down to about 650 °F before allowing it to pass through the supplementary high pressure super-heater section in the peaker cycle exhaust path. This enables the peaker cycle exhaust heat (temperature about 1150 °F) recovery using high-pressure steam that has high heat-work conversion efficiency. In addition to that, optional LP steam circuit from the combined cycle is also used to reduce the exhaust heat to lowest possible temperature. Overall, this embodiment may enable additional power output gain of 50 MW during peaker cycle operation, compared to 35 MW gain from previous designs. Further, the temperature levels upstream of the catalyst can be maintained as low as required for a combined cycle catalyst to ensure efficient operation of the catalyst.

In addition, because the energy has been recovered from the exhaust gas it is at a reduced temperature and, therefore, may be treated with normal, rather than high temperature, SCR catalyst. The above description has described only superheating the low pressure steam. Of course, and described below, high and intermediate pressure steam may also be superheated according to embodiments of the present invention. Of course, only high pressure steam, intermediate pressure steam or a combination of both may be superheated by the peaker exhaust gas according to different embodiments of the present invention. That is, embodiments of the present invention are directed to superheating one or more of low, intermediate and high pressure steam with peaker exhaust gas.

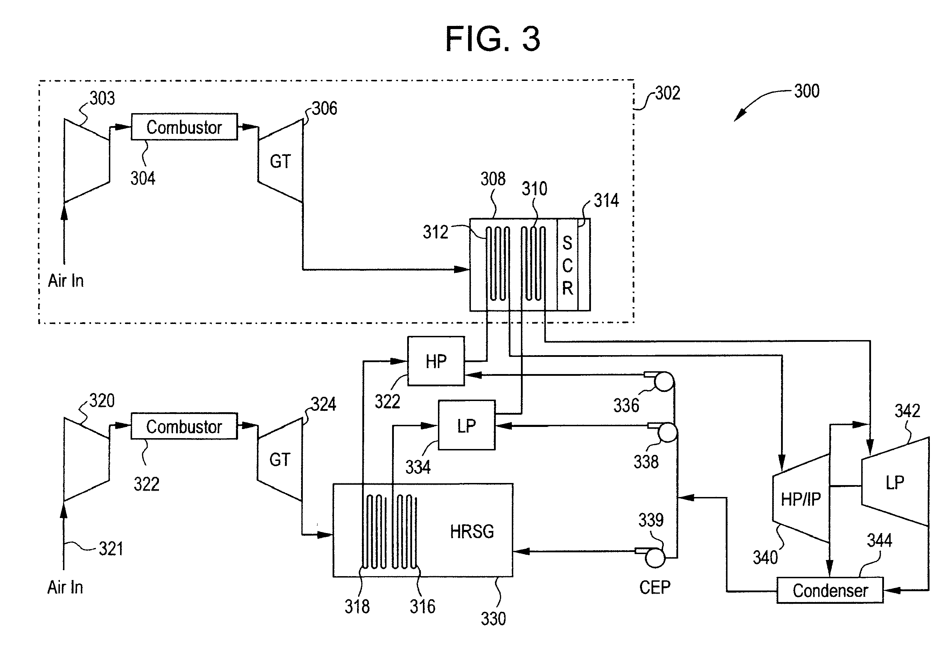

FIG. 3 shows a system 300 according to another embodiment of the present invention. The system includes a peaker cycle 302. The remainder of the system 300 not included in the peaker cycle 302 shall be referred to herein as a combined cycle.

The peaker cycle 302 includes a compressor 303, a combustor 304 and a gas turbine 306. As discussed above, the gas turbine 306 extracts energy from a flow of hot gas produced by combustion of gas or fuel. In one embodiment, the extracted engery is converted to electricity. The peaker cycle 302, also includes an output duct 308. The output duct 308 processes exhaust gas from the gas turbine 306 before it is expelled to the environment. The processing of the exhaust may be accomplished by SCR 314. In one emboidment, the SCR 314 utilizes normal, rather than high, temperature catalysts.

The output duct 308 also includes a supplemental low pressure super-heater 310 and a supplemental high pressure super-heater 312. The supplemental super-heaters 310 and 312 are, respectively, connected to the output of a low pressure super-heater 316 and a high pressure super-heater contained in the combined cycle.

The combined cycle may include a compressor 320 that includes an air intake 321. The compressor 320 is coupled to a combustor 322 that combusts a gas or fuel oil in a stream of compressed air. The compressor 322 is coupled to a gas turbine 324. The gas turbine 324 extracts energy from a flow of hot gas produced by combustion of gas or fuel. In one embodiment, the extracted energy is converted to electricity.

The output of the gas turbine 324 is an exhaust gas that may be used in other cycles of the combined system. The exhaust gas may be used, for example, to heat steam for use in a high pressure steam turbine 326 and a low pressure steam turbine 328. To that end, the combined cycle includes an HSRG 330. The HSRG 330 may include a low pressure super-heater 316 and high pressure super-heater 318.

Steam passing through the high pressure super-heater 318 exits at temperature of about 1050 °F. The steam is mixed with water by the high pressure pre-attemperator 332. In one embodiment, the steam leaves the high pressure pre-attemperator 332 at a temperature of about 650 °F. The high pressure pre-attemperator 332 receives the steam from an output of the high pressure super-heater 318 and water from a first pump 336.

Steam passing through the low pressure super-heater 316 exits at temperature of about 550 °F. The steam is mixed with water by the low pressure pre-attemperator 334. In one embodiment, the steam leaves the low pressure pre-attemperator 334 at a temperature of about 350 °F. The low pressure pre-attemperator 334 receives the steam from an output of the low pressure super-heater 316 and water from a second pump 338. The super-heaters 316 and 318 receive water from a third pump 339.

The output of both the high pressure pre-attemperator 332 and the low pressure pre-attemperator 334 are then superheated in the output duct 308 of the peaker cycle 302. In particular, the output of the high pressure pre-attemperator 332 is connected to an input of the supplementary high pressure super-heater 312. In one embodiment, the output of the high pressure pre-attemperator 332 is superheated to a temperature of about 1050 °F by the supplementary high pressure super-heater 312. The output of the supplementary high pressure super-heater 312 is coupled to an input of a high/intermediate pressure steam turbine 340.

The output of the low pressure pre-attemperator 334 is connected to an input of the supplementary low pressure super-heater 310. In one embodiment, the output of the low pressure pre-attemperator 334 is superheated to a temperature of about 600 °F by the supplementary low pressure super-heater 310. The output of the supplementary low pressure super-heater 310 is coupled to an input of a low pressure steam turbine 342. Remaining steam from the high/intermediate pressure steam turbine 340 and the low pressure steam turbine 342 is condensed in the condensor 344 and the water produced therein is provided to the pumps 336, 338 and 339.

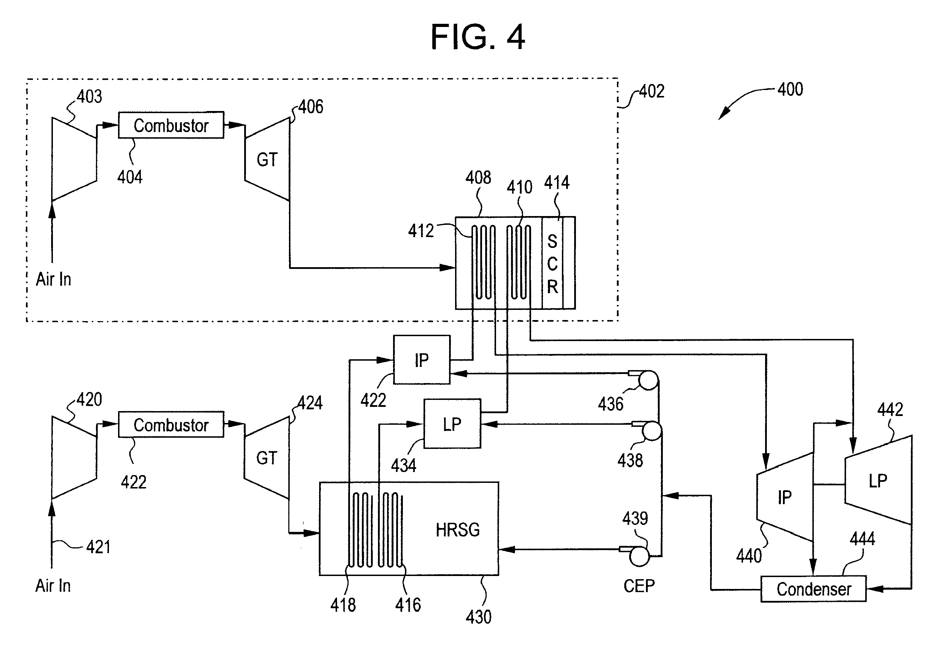

FIG. 4 shows a system 400 according to another embodiment of the present invention. The system includes a peaker cycle 402. The remainder of the system 400 not included in the peaker cycle 402 shall be referred to herein as a combined cycle.

The peaker cycle 402 includes a compressor 403, a combustor 404 and a gas turbine 406. As discussed above, the gas turbine 406 extracts energy from a flow of hot gas produced by combustion of gas or fuel. In one embodiment, the extracted engery is converted to electricity. The peaker cycle 402 also includes an output duct 408. The output duct 408 processes exhaust gas from the gas turbine 406 before it is expelled to the environment. The processing of the exhaust may be accomplished by SCR 414. In one emboidment, the SCR 414 utilizes normal, rather than high, temperature catalysts.

The output duct 408 also includes a supplemental low pressure super-heater 410 and a supplemental intermediate pressure super-heater 412. The supplemental super-heaters 410 and 412 are, respectively, connected to the output of a low pressure super-heater 416 and a intermediate pressure super-heater 418 contained in the combined cycle.

The combined cycle may include a compressor 420 that includes an air intake 421. The compressor 420 is coupled to a combustor 422 that combusts a gas or fuel oil in a stream of compressed air. The compressor 422 is coupled to a gas turbine 424. The gas turbine 424 extracts energy from a flow of hot gas produced by combustion of gas or fuel. In one embodiment, the extracted engery is converted to electricity.

The output of the gas turbine 424 is an exhaust gas that may be used in other cycles of the combined system. The exhaust gas may be used, for example, to heat steam for use in an intermediate pressure steam turbine 426 and a low pressure steam turbine 428. To that end, the combined cycle includes an HSRG 430. The HSRG 430 may includes a low pressure super-heater 416 and an intermediate pressure super-heater 418.

Steam passing through the intermediate pressure super-heater 418 exits at temperature of about 1050 °F. The steam is mixed with water by the intermediate pressure pre-attemperator 432. In one embodiment, the steam leaves the intermediate pressure pre-attemperator 432 at a temperature of about 550 °F. The intermediate pressure pre-attemperator 432 receives the steam from an output of the intermediate pressure super-heater 418 and water from a first pump 436.

Steam passing through the low pressure super-heater 416 exits at temperature of about 600 °F. The steam is mixed with water by the low pressure pre-attemperator 434. In one embodiment, the steam leaves the low pressure pre-attemperator 434 at a temperature of about 350 °F. The low pressure pre-attemperator 434 receives the steam from an output of the low pressure super-heater 416 and water from a second pump 438. The super-heaters 416 and 418 receive water from a third pump 439.

The output of both the intermediate pressure pre-attemperator 432 and the low pressure pre-attemperator 434 are then superheated in the output duct 408 of the peaker cycle 402. In particular, the output of the intermediate pressure pre-attemperator 432 is connected to an input of the supplementary intermediate pressure super-heater 412. In one embodiment, the output of the intermediate pressure pre-attemperator 432 is superheated to a temperature of about 1050 °F by the supplementary intermediate pressure super-heater 412. The output of the supplementary intermediate pressure super-heater 412 is coupled to an input of a intermediate pressure steam turbine 440.

The output of the low pressure pre-attemperator 434 is connected to an input of the supplementary low pressure super-heater 410. In one embodiment, the output of the low pressure pre-attemperator 434 is superheated to a temperature of about 600 °F by the supplementary low pressure super-heater 410. The output of the supplementary low pressure super-heater 410 is coupled to an input of a low pressure steam turbine 442. Remaining steam from the intermediate pressure steam turbine 440 and the low pressure steam turbine 442 is condensed in the condensor 444 and the water produced therein is provided to the pumps 436, 438 and 439.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. An electrical power generation system, the system comprising:
   a first gas turbine;
   a heat recovery steam generator coupled to the gas turbine and including a high pressure super-heater having a high pressure super-heater output;
   a second gas turbine;
   an output duct coupled to the second gas turbine;
   a supplemental high pressure super-heater within the output duct and thermally coupled to the high pressure super-heater output; and
   an attemperator coupled between the high pressure super-heater output and the supplemental high pressure super-heater.
2. The system of clause 1, further comprising:
   a high pressure steam turbine coupled to an output of the supplemental low pressure super-heater.
3. The system of clause 1, wherein the heat recovery steam generator further includes an intermediate pressure super-heater having an intermediate pressure super-heater output and further comprising:
   a supplemental intermediate pressure super-heater within the output duct and thermally coupled to the intermediate pressure super-heater output.
4. The system of clause 3, further comprising:
   an intermediate pressure steam turbine coupled to an output of the supplemental intermediate pressure super-heater.
5. The system of clause 4, further comprising:
   an attemperator coupled between the intermediate pressure super-heater output and the supplemental intermediate pressure super-heater.
6. The system of clause 1, wherein the heat recovery steam generator further includes a low pressure super-heater having a low pressure super-heater output and further comprising:
   a supplemental low pressure super-heater within the output duct and thermally coupled to the low pressure super-heater output.
7. The system of clause 5, further comprising:
   a high pressure steam turbine coupled to an output of the supplemental high pressure super-heater.
8. The system of clause 1, wherein the output duct includes selective catalytic reduction catalysts.
9. The system of clause 8, wherein the selective catalytic reduction catalysts are not high temperature selective catalytic reduction catalysts.
10. An electrical power generation system, the system comprising:
   a combined cycle, the combined cycle including:
      a gas turbine;
      a heat recovery steam generator coupled to the gas turbine and including an intermediate pressure super-heater having an intermediate pressure super-heater output and a low pressure super-heater having a low pressure super-heater output;
      a peaker cycle, the peaker cycle including:
         a peaker gas turbine;
         an output duct coupled to the peaker gas turbine;
         a supplemental intermediate pressure super-heater within the output duct and thermally coupled to the intermediate pressure super-heater output; and
         a supplemental low pressure super-heater within the output duct and thermally coupled to the low pressure super-heater output.
11. The system of clause 10, further comprising:
   a high pressure steam turbine coupled to an output of the supplemental intermediate pressure super-heater.
12. The system of clause 11, wherein the heat recovery steam generator further includes a high pressure super-heater having an high pressure super-heater output and further comprising:
   a supplemental high pressure super-heater within the output duct and thermally coupled to the high pressure super-heater output.
13. The system of clause 11, further comprising:
   an intermediate pressure attemperator coupled between the low pressure super-heater output and the supplemental low pressure super-heater.
14. The system of clause 11, further comprising:
   a low pressure attemperator coupled between the low pressure super-heater output and the supplemental low pressure super-heater.
15. A method for operating a system including a combined cycle and a peaker cycle, the combined cycle including a gas turbine and a heat recovery steam generator coupled to the gas turbine and a peaker cycle including a peaker gas turbine and an output duct, the method comprising:
   superheating a high pressure output product in the heat recovery steam generator; and
   superheating the output product in a supplemental high pressure super-heater within the output duct after the output product has be superheated in the heat recovery steam generator and before the output product is provided a another turbine; and
   mixing the output product with water in an attemperator before the output product is superheated in the supplemental high pressure super-heater.
16. The method of clause 15, wherein the output product is steam and the another turbine is a steam turbine.
17. The method of clause 15, further comprising:
   superheating a low pressure output product in the heat recovery steam generator; and
   superheating the output product in a supplemental low pressure super-heater within the output duct after the output product has be superheated in the heat recovery steam generator and before the output product is provided a another turbine; and
   mixing the output product with water in an attemperator before the output product is superheated in the supplemental low pressure super-heater.

## Claims

1. An electrical power generation system, the system comprising:
a first gas turbine (324);
a heat recovery steam generator (330) coupled to the first gas turbine (320) and including a high pressure super-heater (318) having a high pressure super-heater output;
a second gas turbine (306);
an output duct coupled to the second gas turbine (314);
a supplemental high pressure super-heater (308) within the output duct (314) and thermally coupled to the high pressure super-heater output (318); and
an attemperator (322) coupled between the high pressure super-heater output and the supplemental high pressure super-heater.

2. The system of claim 1, further comprising:
a high pressure steam turbine (340) coupled to an output of the supplemental high pressure super-heater.

3. The system of claim 1 or 2, wherein the heat recovery steam generator further includes an intermediate pressure super-heater having an intermediate pressure super-heater (418) output and further comprising:
a supplemental intermediate pressure super-heater (410) within the output duct and thermally coupled to the intermediate pressure super-heater output.

4. The system of claim 3, further comprising:
an intermediate pressure steam turbine (440) coupled to an output of the supplemental intermediate pressure super-heater.

5. The system of claim 4, further comprising:
an intermediate attemperator (422) coupled between the intermediate pressure super-heater output and the supplemental intermediate pressure super-heater.

6. The system of any of the preceding claims, wherein the heat recovery steam generator further includes a low pressure super-heater (316) having a low pressure super-heater output and further comprising:
a supplemental low pressure super-heater (310) within the output duct and thermally coupled to the low pressure super-heater output.

7. The system of claim 5, further comprising:
a high pressure steam turbine coupled to an output of the supplemental high pressure super-heater (340).

8. The system of any of the preceding claims, wherein the output duct includes selective catalytic reduction catalysts (314).

9. The system of claim 8, wherein the selective catalytic reduction catalysts are not high temperature selective catalytic reduction catalysts.

10. An electrical power generation system, the system comprising:
a combined cycle, the combined cycle including:
a gas turbine;
a heat recovery steam generator coupled to the gas turbine and including an intermediate pressure super-heater having an intermediate pressure super-heater output and a low pressure super-heater having a low pressure super-heater output;
a peaker cycle, the peaker cycle including:
a peaker gas turbine;
an output duct coupled to the peaker gas turbine;
a supplemental intermediate pressure super-heater within the output duct and thermally coupled to the intermediate pressure super-heater output; and
a supplemental low pressure super-heater within the output duct and thermally coupled to the low pressure super-heater output.

11. The system of clause 10, further comprising:
a high pressure steam turbine coupled to an output of the supplemental intermediate pressure super-heater.

12. The system of clause 11, wherein the heat recovery steam generator further includes a high pressure super-heater having an high pressure super-heater output and further comprising:
a supplemental high pressure super-heater within the output duct and thermally coupled to the high pressure super-heater output.

13. A method for operating a system including a combined cycle and a peaker cycle, the combined cycle including a gas turbine and a heat recovery steam generator coupled to the gas turbine and a peaker cycle including a peaker gas turbine and an output duct, the method comprising:
superheating a high pressure output product in the heat recovery steam generator; and
superheating the output product in a supplemental high pressure super-heater within the output duct after the output product has be superheated in the heat recovery steam generator and before the output product is provided a another turbine; and
mixing the output product with water in an attemperator before the output product is superheated in the supplemental high pressure super-heater.

14. The method of clause 13, wherein the output product is steam and the another turbine is a steam turbine.

15. The method of clause 14, further comprising:
superheating a low pressure output product in the heat recovery steam generator; and
superheating the output product in a supplemental low pressure super-heater within the output duct after the output product has be superheated in the heat recovery steam generator and before the output product is provided a another turbine; and
mixing the output product with water in an attemperator before the output product is superheated in the supplemental low pressure super-heater.
